(19) Europäisches Patentamt
European Patent Office
Office européen des brevets

(11) EP 4 234 252 A1

(12) EUROPEAN PATENT APPLICATION
published in accordance with Art. 153(4) EPC

(43) Date of publication:
30.08.2023 Bulletin 2023/35

(51) International Patent Classification (IPC):
B41J 2/01 (2006.01)     C09D 11/326 (2014.01)
C09D 11/38 (2014.01)     B41M 5/00 (2006.01)

(21) Application number: 21886167.2

(52) Cooperative Patent Classification (CPC):
B41J 2/01; B41M 5/00; C09D 11/322;
C09D 11/326; C09D 11/38

(22) Date of filing: 26.10.2021

(86) International application number:
PCT/JP2021/039382

(87) International publication number:
WO 2022/092049 (05.05.2022 Gazette 2022/18)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.10.2020  JP 2020179132

(71) Applicant: Kao Corporation
Chuo-ku
Tokyo 103-8210 (JP)

(72) Inventors:
• INOUE, Masashi
  Wakayama-shi, Wakayama 640-8580 (JP)
• KAWATA, Daiki
  Wakayama-shi, Wakayama 640-8580 (JP)
• EGUCHI, Tetsuya
  Wakayama-shi, Wakayama 640-8580 (JP)

(74) Representative: Hoffmann Eitle
Patent- und Rechtsanwälte PartmbB
Arabellastraße 30
81925 München (DE)

(54) **WATER-BASED INK FOR INKJET RECORDING**

(57) The present invention relates to a water-based ink for ink-jet printing which contains a pigment, water-insoluble crosslinked polymer particles, an organic solvent, and water, in which the water-insoluble crosslinked polymer particles are constituted of a polymer A which contains carboxy groups and has an acid value of 45 to 180 mgKOH/g; the ink contains alkali metal ions in an amount of 15 to 65 mol% and ammonium ions in an amount of 55 to 145 mol% both on the basis of a whole molar amount of the carboxy groups of the polymer A present in the ink; and a total content of the alkali metal ions and the ammonium ions in the ink is 100 to 185 mol% on the basis of the whole molar amount of the carboxy groups of the polymer A.

EP 4 234 252 A1

**Description**

FIELD OF THE INVENTION

The present invention relates to a water-based ink for ink-jet printing.

BACKGROUND OF THE INVENTION

In ink-jet printing methods, droplets of ink are directly ejected from very fine nozzles and allowed to adhere to a printing medium to obtain printed characters or images. The ink-jet printing methods have become rapidly spread because of various advantages such as easiness of full coloration, low cost, capability of using a plain paper as the printing medium, non-contact of a printing apparatus with the printed characters or images on the printing medium, etc.

With the recent progress of digital printing techniques, the ink-jet printing methods have also been employed not only in the printing applications for ordinary consumer use, but also in the commercial printing or industrial printing applications in which a low-liquid absorbing coated paper or a non-liquid absorbing resin film has been used.

Under such circumstances, it has been required that inks used in the ink-jet printing methods have high storage stability, and exhibit high-water resistance when used against a low-liquid absorbing or non-liquid absorbing printing medium, and various proposals have been made to meet these requirements.

For example, JP 2018-28080A (Patent Literature 1) discloses, as a water -based ink that is capable of providing a printed material having excellent water resistance, and exhibits excellent storage stability, while maintaining good re-dispersibility, a water-based ink for ink-jet printing which contains a pigment water dispersion that contains pigment-containing water-insoluble crosslinked polymer particles, a water-soluble base compound, and water, and a water-soluble organic solvent, in which a water-insoluble crosslinked polymer constituting the polymer particles has a crosslinked structure containing an ester group derived from a carboxy group and a water-insoluble crosslinking agent, a saponification degree of the water-insoluble crosslinked polymer is 170 to 300 mgKOH/g, and the water-soluble base compound contains a water-soluble amine compound.

JP 2019-14883A (Patent Literature 2) discloses, as a water-based ink capable of exhibiting excellent ejection stability and image fastness while maintaining good optical density upon printing, such a water-based ink that contains pigment-containing water-insoluble crosslinked polymer particles, a polymer emulsion, and water, in which a water-insoluble crosslinked polymer constituting the crosslinked polymer particles is obtained by subjecting a polymer containing a constitutional unit derived from a carboxylic acid monomer having an acid value of not less than 200 mgKOH/g and a constitutional unit derived from a hydrophobic monomer to crosslinking reaction with an epoxy compound, and a polymer constituting the polymer emulsion contains a constitutional unit derived from a carboxylic acid monomer and a constitutional unit derived from a hydrophobic monomer.

SUMMARY OF THE INVENTION

The present invention relates to a water-based ink for ink-jet printing, which contains a pigment, water-insoluble crosslinked polymer particles, an organic solvent, and water, in which:

the water-insoluble crosslinked polymer particles are constituted of a polymer A having a crosslinked structure, which contains carboxy groups and has an acid value of not less than 45 mgKOH/g and not more than 180 mgKOH/g; the ink contains alkali metal ions in an amount of not less than 15 mol% and not more than 65 mol%, and ammonium ions in an amount of not less than 55 mol% and not more than 145 mol%, both on the basis of a whole molar amount of the carboxy groups of the polymer A present in the ink; and a total content of the alkali metal ions and the ammonium ions in the ink is not less than 100 mol% and not more than 185 mol% on the basis of the whole molar amount of the carboxy groups of the polymer A.

DETAILED DESCRIPTION OF THE INVENTION

It has been required that the water-based ink for ink-jet printing is highly improved in productivity. However, the water-based ink for ink-jet printing has posed such a problem that when starting the ink-jet printing operation again after interruption thereof, it is not possible to normally eject the ink. For this reason, it has been required that the ink is improved in ejection stability upon restarting of the printing operation.

The water-based inks described in the Patent Literatures 1 and 2 have been improved in their properties to a certain extent. However, it has been still demanded to further improve storage stability and ejection stability of these inks as well as water resistance of a printed material obtained using the inks.

The present invention relates to a water-based ink for ink-jet printing which is excellent in storage stability and ejection stability and is capable of providing a printed material having excellent water resistance.

The present inventors have found that, in a water-based ink containing a pigment, water-insoluble crosslinked polymer particles, and an organic solvent, it is possible to solve the aforementioned conventional problem, when the contents of sodium ions and ammonium ions in the ink are suitably controlled on the basis of an amount of the carboxy groups of the polymer.

That is, the present invention relates to a water-based ink for ink-jet printing which contains a pigment, water-insoluble crosslinked polymer particles, an organic solvent, and water, in which:

the water-insoluble crosslinked polymer particles are constituted of a polymer A having a crosslinked structure, which contains carboxy groups and has an acid value of not less than 45 mgKOH/g and not more than 180 mgKOH/g; the ink contains alkali metal ions in an amount of not less than 15 mol% and not more than 65 mol%, and ammonium ions in an amount of not less than 55 mol% and not more than 145 mol%, both on the basis of a whole molar amount of the carboxy groups of the polymer A present in the ink; and
a total content of the alkali metal ions and the ammonium ions in the ink is not less than 100 mol% and not more than 185 mol% on the basis of the whole molar amount of the carboxy groups of the polymer A.

According to the present invention, it is possible to provide a water-based ink for ink-jet printing which is excellent in storage stability and ejection stability and is capable of providing a printed material having excellent water resistance.

[Water-Based Ink for Ink-Jet Printing]

The water-based ink for ink-jet printing according to the present invention (hereinafter also referred to merely as an "ink of the present invention") contains a pigment, water-insoluble crosslinked polymer particles, an organic solvent and water, in which:

the water-insoluble crosslinked polymer particles are constituted of a polymer A having a crosslinked structure, which contains carboxy groups and has an acid value of not less than 45 mgKOH/g and not more than 180 mgKOH/g; the ink contains alkali metal ions in an amount of not less than 15 mol% and not more than 65 mol%, and ammonium ions in an amount of not less than 55 mol% and not more than 145 mol%, both on the basis of a whole molar amount of the carboxy groups of the polymer A present in the ink; and
a total content of the alkali metal ions and the ammonium ions in the ink is not less than 100 mol% and not more than 185 mol% on the basis of the whole molar amount of the carboxy groups of the polymer A.

Meanwhile, the term "printing" as used in the present specification means a concept that includes printing or typing operation for printing characters or images, and the term "printed material" as used in the present specification means a concept that includes printed or typed materials on which characters or images are printed.

The term "water-based" as used herein means such a condition that water has a largest content among components of a medium contained in the ink.

In addition, the term "low-water absorbing" as used in the present specification is intended to include both concepts of low-liquid absorbing properties and non-liquid absorbing properties, and the low-water absorbing printing medium means a printing medium having a water absorption of not less than 0 $g/m^2$ and not more than 10 $g/m^2$ as measured under the condition that a contact time between the printing medium and pure water is 100 milliseconds.

The water-based ink for ink-jet printing according to the present invention is excellent in storage stability and ejection stability, and is capable of providing a printed material having excellent water resistance. The reason why the aforementioned advantageous effects can be attained by the present invention is considered as follows though it is not clearly determined yet.

The water-based ink for ink-jet printing tends to suffer from such a problem that when exposing the ink to severe drying conditions in the proximity of ejection nozzles, aggregates of the ink are produced in the vicinity of the air-liquid interface, so that the nozzles are clogged therewith. In such a case, it is considered that by allowing water-insoluble polymer particles contained in the ink to have a crosslinked structure and controlling an acid value of the polymer constituting the water-insoluble crosslinked polymer particles to not less than 45 mgKOH/g, it is possible to maintain high electrostatic repulsion force between the polymer particles and inhibit production of the aggregates of the ink even when exposing the ink to severe drying conditions in the proximity of the ejection nozzles to thereby improve storage stability and ejection stability of the ink.

Also, it is considered that by allowing the alkali metal ions to be present in the same system in an amount of not less than 15 mol% and not more than 65 mol% on the basis of the whole amount of the carboxy groups of the polymer constituting the water-insoluble crosslinked polymer particles, even when the aggregates of the ink are produced, the ink is capable of restoring its original dispersed condition owing to the presence of the alkali metal ions having high affinity to water in the ink, upon filling the ink component in the nozzles again, more specifically, upon purging the nozzles therewith, whereby it is possible to achieve excellent ejection stability of the ink.

Moreover, by adjusting the acid value of the polymer constituting the water-insoluble crosslinked polymer particles to not more than 180 mgKOH/g, a coating film of the ink obtained upon forming images on a low-water absorbing printing medium is improved in water resistance. In addition, when controlling the amount of the alkali metal ions to the aforementioned amount on the basis of the whole amount of the carboxy groups present in the system and further incorporating the ammonium ions in addition to the alkali metal ions into the system in an amount of not less than 55 mol% and not more than 145 mol% on the basis of the whole amount of the carboxy groups in the water-insoluble crosslinked polymer particles present in the system, it is possible to shorten the time taken until allowing the resulting images to show adequate water resistance after formation of the images.

Furthermore, it is considered that when controlling the total content of the alkali metal ions and the ammonium ions in the ink to not less than 100 mol% and not more than 185 mol% on the basis of the whole amount of the carboxy groups in the water-insoluble crosslinked polymer particles present in the system, the base (ammonium ions) forming no neutralized salt is allowed to be present in the ink, so that it is possible to promote re-dispersion of the aggregates of the ink and thereby improve ejection stability of the ink.

<Pigment>

The pigment used in the present invention may be either an inorganic pigment or an organic pigment, and may also be used in the form of a lake pigment or a fluorescent pigment. In addition, the inorganic or organic pigment may also be used in combination with an extender pigment, if required.

Specific examples of the inorganic pigment include carbon blacks, metal oxides, such as titanium oxide, iron oxide, red iron oxide, chromium oxide, etc., iridescent nacreous pigments, and the like. In particular, the carbon blacks are preferably used for black inks. Examples of the carbon blacks include furnace blacks, thermal lamp blacks, acetylene blacks, channel blacks and the like.

Specific examples of the organic pigment include azo pigments, such as azo lake pigments, insoluble monoazo pigments, insoluble disazo pigments, chelate azo pigments, etc.; polycyclic pigments, such as phthalocyanine pigments, perylene pigments, perinone pigments, anthraquinone pigments, quinacridone pigments, dioxazine pigments, thioindigo pigments, isoindolinone pigments, quinophthalone pigments, diketopyrrolopyrrole pigments, benzimidazolone pigments, threne pigments, etc.; and the like.

The hue of the pigment is not particularly limited, and there may be used any of achromatic color pigments, such as a white pigment, a black pigment, a gray pigment, etc.; and chromatic color pigments, such as a yellow pigment, a magenta pigment, a cyan pigment, a blue pigment, a red pigment, an orange pigment, a green pigment, etc.

Specific examples of the preferred organic pigments include one or more pigments selected from the group consisting of commercially available products marketed under the names of C.I. Pigment Yellow, C.I. Pigment Red, C.I. Pigment Orange, C.I. Pigment Violet, C.I. Pigment Blue and C.I. Pigment Green with various part numbers.

Examples of the extender pigment include silica, calcium carbonate, talc and the like.

The aforementioned pigments may be used alone or in the form of a mixture of any two or more thereof.

The pigment is preferably dispersed in the water-based ink with a water-insoluble crosslinked polymer having a crosslinked structure that is constituted of a structure derived from a water-insoluble polymer containing carboxy groups and a structure derived from a crosslinking agent capable of reacting with the carboxy groups of the water-insoluble polymer.

The pigment is preferably dispersed in the form of water-insoluble crosslinked polymer particles containing the pigment from the viewpoint of improving storage stability and ejection stability of the resulting ink. The water-insoluble crosslinked polymer particles containing the pigment as used in the present specification (hereinafter also referred to as "pigment-containing crosslinked polymer particles") mean any of particles having a configuration in which the pigment is included in the water-insoluble polymer having the crosslinked structure, particles having a configuration in which the pigment is partially exposed onto a surface of the respective particles formed of the water-insoluble crosslinked polymer and the pigment, and particles having a configuration in which the water-insoluble crosslinked polymer is adsorbed onto a part of the pigment, as well as a mixture of these configurations.

(Carboxy Group-Containing Water-Insoluble Polymer)

The carboxy group-containing water-insoluble polymer constituting the pigment-containing crosslinked polymer particles (hereinafter also referred to a "polymer a") is a polymer having a pigment-dispersing capability by which the pigment can be dispersed in a water-based medium, and contain carboxy groups. The polymer a may be either a water-soluble polymer or a water-insoluble polymer. Of these polymers, preferred is the water-insoluble polymer. The polymer a may be in the form of a water-soluble polymer as long as the water-soluble polymer is transformed into a water-insoluble polymer by crosslinking the polymer.

The term "water-insoluble" as used herein means that when drying the polymer to a constant weight at 105 °C for 2 hours and then dissolving the polymer in 100 g of water at 25 °C until reaching a saturated concentration thereof, the solubility in water of the polymer is not more than 10 g. In the case where the water-insoluble polymer is in the form of an anionic polymer, the solubility thereof means a solubility in water of the polymer in which 100% of anionic groups are neutralized with sodium hydroxide.

The polymer a is preferably a vinyl-based polymer obtained by addition-polymerizing vinyl monomers from the viewpoint of improving storage stability and ejection stability of the ink of the present invention.

The vinyl-based polymer is more preferably in the form of a vinyl-based polymer that contains a constitutional unit derived from (a-1) a carboxy group-containing monomer and is produced by copolymerizing a monomer mixture A containing the component (a-1) and (a-2) a hydrophobic monomer. The vinyl-based polymer contains the constitutional unit derived from the component (a-1) and a constitutional unit derived from the component (a-2).

As the carboxy group-containing monomer (a-1), preferred is a carboxylic acid monomer, and more preferred is at least one monomer selected from the group consisting of acrylic acid and methacrylic acid.

Specific examples of the hydrophobic monomer (a-2) include those monomers described in the paragraphs [0020] to [0022] of JP 2018-83938A. Among these monomers, preferred is at least one monomer selected from the group consisting of an alkyl (meth)acrylate containing an alkyl group having not less than 1 and not more than 22 carbon atoms, styrene, α-methyl styrene and benzyl (meth)acrylate.

In the polymer a, there may be further used (a-3) a nonionic monomer.

Specific examples of the component (a-3) include those monomers described in the paragraph [0018] of JP 2018-83938A. Among these monomers, preferred is at least one monomer selected from the group consisting of methoxy polyethylene glycol (n = 1 to 30) (meth)acrylate and polypropylene glycol (n = 2 to 30) (meth)acrylate.

From the aforementioned viewpoint, the polymer a is preferably a (meth)acrylic-styrene-based resin that contains a constitutional unit derived from at least one monomer selected from the group consisting of acrylic acid and methacrylic acid as the component (a-1), and a constitutional unit derived from at least one monomer selected from the group consisting of an alkyl (meth)acrylate, styrene, α-methyl styrene and benzyl (meth)acrylate, preferably at least one monomer selected from the group consisting of styrene and α-methyl styrene.

(Contents of Respective Components in Monomer Mixture A or Contents of Respective Constitutional Units in Polymer a)

The contents of the respective components in the monomer mixture A (contents of non-neutralized components; hereinafter also defined in the same way) as used upon production of the polymer a, or the contents of the respective constitutional units in the polymer a, are as follows, from the viewpoint of improving dispersion stability of the pigment as well as improving storage stability and ejection stability of the ink of the present invention.

The content of the component (a-1) is preferably not less than 2% by mass, more preferably not less than 5% by mass, and even more preferably not less than 10% by mass, and is also preferably not more than 55% by mass, more preferably not more than 50% by mass, and even more preferably not more than 45% by mass.

The content of the component (a-2) is preferably not more than 98% by mass, more preferably not more than 95% by mass and even more preferably not more than 90% by mass, and is also preferably not less than 45% by mass, more preferably not less than 50% by mass, and even more preferably not less than 55% by mass.

In the case where the component (a-3) is included, the content of the component (a-3) is preferably not less than 5% by mass and more preferably not less than 10% by mass, and is also preferably not more than 30% by mass and more preferably not more than 25% by mass.

The mass ratio of the component (a-1) to the component (a-2) [(a-1)/(a-2)] is preferably not less than 0.1, more preferably not less than 0.2, and even more preferably not less than 0.25, and is also preferably not more than 1.2, more preferably not more than 1.0, and even more preferably not more than 0.8.

The contents of the constitutional units derived from the components (a-1) to (a-3) in the polymer a used in the present invention not only may be determined by actual measurements thereof, but also may be indicated by respective charging ratios of the raw material monomers including the components (a-1) to (a-3) used upon production of the polymer a as a substitute for the aforementioned contents.

(Production of Polymer a)

The polymer a may be produced by copolymerizing the monomer mixture A by known polymerization methods. As the polymerization methods, preferred is a solution polymerization method.

The solvent used in the solution polymerization method is not particularly limited, and is preferably a polar solvent, such as water, lower aliphatic alcohols, ketones, such as methyl ethyl ketone, etc., ethers, esters, and the like.

The polymerization may be carried out in the presence of a polymerization initiator, such as azo compounds, persulfuric acid salts, etc., or a polymerization chain transfer agent, such as mercaptans, etc. The polymerization temperature may vary depending upon the kinds of polymerization initiators, monomers and solvents used, etc. The polymerization temperature is preferably not lower than 30 °C and more preferably not lower than 50 °C, and is also preferably not higher than 95 °C and more preferably not higher than 80 °C.

As the polymer a, there may also be used a commercially available product. Examples of the commercially available product of the polymer a include styrene-acrylic resins, such as "JONCRYL 690", etc., available from BASF Japan, Ltd., and the like.

The number-average molecular weight of the polymer a is preferably not less than 3,000, more preferably not less than 5,000, and even more preferably not less than 8,000, and is also preferably not more than 150,000, more preferably not more than 100,000. and even more preferably not more than 50,000, from the viewpoint of improving dispersion stability of the pigment in the ink.

From the same viewpoint as described above, the acid value of the polymer a is preferably not less than 50 mgKOH/g, more preferably not less than 80 mgKOH/g, and even more preferably not less than 100 mgKOH/g, and is also preferably not more than 500 mgKOH/g, more preferably not more than 400 mgKOH/g, and even more preferably not more than 300 mgKOH/g.

The number-average molecular weight and the acid value of the polymer may be measured by the respective methods described in Examples below.

<Production of Pigment-Containing Crosslinked Polymer Particles>

The water-insoluble crosslinked polymer particles containing the pigment (pigment-containing crosslinked polymer particles) are preferably produced in the form of a pigment water dispersion thereof by a process including the following steps I to III from the viewpoint of efficiently producing the polymer particles.

Step I: subjecting a mixture containing the polymer a, an organic solvent, the pigment, and water (hereinafter also referred to as a "pigment mixture") to dispersion treatment to obtain a pigment dispersion liquid of polymer particles containing the pigment (hereinafter also referred to as "pigment-containing polymer particles");
Step II: removing the aforementioned organic solvent from the pigment dispersion liquid obtained in the step I to obtain a water dispersion liquid of the pigment-containing polymer particles (hereinafter also referred to as a "pigment water dispersion liquid"); and
Step III: subjecting the pigment water dispersion liquid obtained in the step II to crosslinking treatment with a crosslinking agent to thereby obtain a pigment water dispersion containing pigment-containing crosslinked polymer particles that is constituted of a polymer A having a crosslinked structure and the pigment.

(Step I)

The step I is preferably conducted by the method in which the polymer a is first dissolved in the organic solvent, and then the pigment, water, and a neutralizing agent are added and mixed, if required together with a surfactant, etc., into the resulting polymer solution to obtain a dispersion of an oil-in-water type.

The organic solvent used for dissolving the polymer a is not particularly limited. As the organic solvent, preferred are aliphatic alcohols having 1 to 3 carbon atoms, ketones, ethers, esters, and the like. Among these organic solvents, from the viewpoint of improving wettability to the pigment, solubility of the polymer a therein, and adsorptivity of the polymer a to the pigment, more preferred are ketones having not less than 4 and not more than 8 carbon atoms, even more preferred are methyl ethyl ketone and methyl isobutyl ketone, and further even more preferred is methyl ethyl ketone. In the case where the polymer a is synthesized by a solution polymerization method, the solvent used in the solution polymerization method may be directly used as such in the step I.

(Neutralization of Polymer a)

The carboxy groups of the polymer a are at least partially neutralized using a neutralizing agent. When neutralizing the carboxy groups of the polymer a, the neutralization is preferably conducted such that the pH value of the resulting dispersion falls within the range of not less than 6 and not more than 10.

From the viewpoint of improving storage stability and ejection stability of the resulting water-based ink, an alkali metal hydroxide capable of producing alkali metal ions is used as the neutralizing agent.

The alkali metal ion is preferably at least one ion selected from the group consisting of a sodium ion and a potassium ion. That is, the alkali metal hydroxide is preferably sodium hydroxide or potassium hydroxide.

In addition, the polymer a may be preliminarily neutralized with the alkali metal ions prior to the step I.

The neutralizing agent is preferably used in the form of an aqueous neutralizing agent solution from the viewpoint of sufficiently and uniformly accelerating the neutralization. The concentration of the aqueous neutralizing agent solution is preferably not less than 3% by mass, more preferably not less than 10% by mass and even more preferably not less than 15% by mass, and is also preferably not more than 50% by mass and more preferably not more than 25% by mass.

The neutralization degree of the polymer a with the alkali metal ions in the step I (hereinafter also referred to as a "neutralization degree of the polymer a") is preferably not less than 7 mol%, more preferably not less than 10 mol%, and even more preferably not less than 13 mol%, and is also preferably not more than 30 mol%, more preferably not more than 28 mol%, and even more preferably not more than 26 mol%, on the basis of the whole molar amount of the carboxy groups of the polymer a, from the viewpoint of improving storage stability and ejection stability of the resulting water-based ink.

The neutralization degree of the polymer a as used herein means the value obtained by dividing the molar number of the neutralizing agent (alkali metal ions) in the pigment mixture by the molar number of the carboxy groups of the polymer a in the pigment mixture, i.e., the value of "(molar number of alkali metal ions in pigment mixture)/(molar number of carboxy groups of polymer a in pigment mixture)".

(Dispersion Treatment of Pigment Mixture)

In the step I, the pigment mixture is subjected to dispersion treatment to obtain a pigment dispersion liquid of the pigment-containing polymer particles. The dispersing method used for obtaining the pigment dispersion liquid is not particularly limited. The pigment particles may be atomized into fine particles having a desired average particle size only by substantial dispersion treatment. However, it is preferred that the pigment mixture is first subjected to preliminary dispersion treatment by applying a mechanical force to the pigment mixture, and then further subjected to the substantial dispersion treatment by applying a shear stress thereto so as to control the average particle size of the resulting pigment particles to a desired value.

The method of applying a mechanical force to the pigment mixture is not particularly limited. In the method, there may be used ordinary mixing and stirring devices such as anchor blades, disper blades and the like.

As a means for applying a shear stress to the pigment mixture in the substantial dispersion treatment, there may be mentioned kneading machines such as roll mills, kneaders, etc., high-pressure homogenizers such as "MICROFLUIDIZER" available from Microfluidics Corporation, etc., and media-type dispersers such as paint shakers. beads mills, etc. Among these devices, the high-pressure homogenizers are preferably used from the viewpoint of reducing the particle size of the pigment.

In the case where the substantial dispersion treatment is conducted using the high-pressure homogenizer, the particle size of the pigment can be adjusted to a desired value by controlling the treating pressure and the number of passes through the homogenizer used therein. The treating pressure used in the dispersion treatment is preferably not less than 80 MPa and more preferably not less than 120 MPa, and is also preferably not more than 300 MPa and more preferably not more than 250 MPa, from the viewpoint of enhancing productivity and attaining good cost efficiency. Also, the number of passes through the homogenizer used in the dispersion treatment is preferably not less than 3 and more preferably not less than 5, and is also preferably not more than 30 and more preferably not more than 25.

(Step II)

In the step II, the organic solvent is removed from the pigment dispersion liquid obtained in the step I by conventionally known methods, so that it is possible to obtain a water dispersion liquid of the pigment-containing polymer particles (pigment water dispersion liquid). The organic solvent is preferably substantially completely removed from the thus obtained pigment water dispersion liquid. However, the residual organic solvent may be present in the pigment water dispersion liquid unless the objects and advantageous effects of the present invention are adversely affected by the residual organic solvent.

(Step III)

In the step III, the carboxy groups of the polymer a constituting the pigment-containing polymer particles present in the pigment water dispersion liquid are partially chemically reacted and crosslinked to form a crosslinked structure on the surface layer portion of the respective pigment-containing polymer particles. More specifically, the polymer a constituting the pigment-containing polymer particles contained in the pigment water dispersion liquid is crosslinked with a crosslinking agent and thereby transformed into the polymer A having a crosslinked structure to obtain the pigment-containing crosslinked polymer particles.

(Crosslinking Agent)

The crosslinking agent used in the present invention is preferably a compound containing two or more functional groups capable of reacting with the carboxy groups of the polymer a in a molecule thereof and more preferably a polyfunctional epoxy compound, from the viewpoint of improving storage stability and ejection stability of the resulting water-based ink.

The polyfunctional epoxy compound is preferably a compound containing two or more epoxy groups in a molecule thereof, more preferably a glycidyl ether group-containing compound, and even more preferably a glycidyl ether compound of a polyhydric alcohol containing a hydrocarbon group having not less than 3 and not more than 8 carbon atoms.

When using the glycidyl ether compound of the polyhydric alcohol as the crosslinking agent, it is possible to allow the resulting water-insoluble crosslinked polymer particles to have a crosslinked structure that is derived from a polyglycidyl ether compound of the polyhydric alcohol.

The number of the epoxy groups contained in the polyfunctional epoxy compound is not less than 2 and preferably not less than 3 per a molecule of the polyfunctional epoxy compound from the viewpoint of efficiently reacting the polyfunctional epoxy compound with the carboxy groups to thereby enhance storage stability of the resulting pigment-containing crosslinked polymer particles, etc, and is also preferably not more than 6 per a molecule of the polyfunctional epoxy compound, and from the viewpoint of attaining good availability in the market, more preferably not more than 4.

Specific examples of the polyfunctional epoxy compound include polyglycidyl ethers such as polypropylene glycol diglycidyl ether, glycerin polyglycidyl ether, glycerol polyglycidyl ether, polyglycerol polyglycidyl ether, trimethylolpropane polyglycidyl ether, 1,6-hexanediol diglycidyl ether, sorbitol polyglycidyl ether, pentaerythritol polyglycidyl ether, resorcinol diglycidyl ether, neopentyl glycol diglycidyl ether, hydrogenated bisphenol A-type diglycidyl ethers, etc., and the like.

Of these polyfunctional epoxy compounds, preferred is at least one compound selected from the group consisting of trimethylolpropane polyglycidyl ether, 1,6-hexanediol diglycidyl ether and pentaerythritol polyglycidyl ether.

The crosslinking reaction of the polymer a is preferably conducted after dispersing the pigment with the polymer a. From the viewpoint of completing the reaction and attaining good cost efficiency, the temperature used in the crosslinking reaction is preferably not lower than 50 °C and more preferably not lower than 60 °C, and is also preferably not higher than 95 °C and more preferably not higher than 85 °C.

In addition, the time of the crosslinking reaction is preferably not less than 0.5 hour and more preferably not less than 1 hour, and is also preferably not more than 12 hours and more preferably not more than 10 hours.

The crosslinking degree of the polymer A constituting the water-insoluble crosslinked polymer particles is preferably not less than 20 mol%, more preferably not less than 25 mol%, and even more preferably not less than 30 mol%, and is also preferably not more than 80 mol%, more preferably not more than 70 mol%, and even more preferably not more than 60 mol%.

The crosslinking degree of the polymer A is an apparent crosslinking degree calculated from an acid value of the polymer and an equivalent amount of the epoxy groups of the crosslinking agent, i.e., the crosslinking degree of the polymer A is indicated by the value of "(molar number of epoxy groups of crosslinking agent added to pigment water dispersion liquid)/(molar number of carboxy groups of polymer a in pigment water dispersion liquid)".

The acid value of the polymer A obtained after subjecting the polymer a to the crosslinking reaction is not less than 45 mgKOH/g, preferably not less than 50 mgKOH/g, more preferably not less than 55 mgKOH/g, and even more preferably not less than 60 mgKOH/g, and is also not more than 180 mgKOH/g, preferably not more than 170 mgKOH/g, more preferably not more than 160 mgKOH/g, and even more preferably not more than 150 mgKOH/g.

The average particle size of the pigment-containing crosslinked polymer particles in the pigment water dispersion is preferably not less than 60 nm, more preferably not less than 70 nm, and even more preferably not less than 80 nm, and is also preferably not more than 200 nm, more preferably not more than 160 nm, and even more preferably not more than 150 nm, from the viewpoints of suppressing formation of coarse particles and improving ejection stability of the resulting water-based ink.

The average particle size of the pigment-containing crosslinked polymer particles in the water-based ink is substantially the same as the average particle size of the polymer particles in the water-based pigment dispersion.

The concentration of non-volatile components in the resulting pigment water dispersion (solid content of the pigment water dispersion) is preferably not less than 10% by mass and more preferably not less than 15% by mass, and is also preferably not more than 30% by mass and more preferably not more than 25% by mass, from the viewpoint of improving dispersion stability of the pigment water dispersion as well as from the viewpoint of facilitating preparation of the water-based ink.

Incidentally, the solid content of the pigment water dispersion may be measured by the method described in Examples below.

[Method for Producing Ink of the Present Invention]

The ink of the present invention can be efficiently produced by mixing the pigment water dispersion containing the pigment-containing crosslinked polymer particles obtained in the aforementioned step III, aqueous ammonia, an organic solvent, and water, if required together with various additives, such as a a surfactant, etc.,

The method of mixing the aforementioned respective components is not particularly limited.

(Alkali Metal Ions in Ink of the Present Invention)

The ink of the present invention contains alkali metal ions in an amount corresponding to not less than 15 mol% and not more than 65 mol% on the basis of the whole molar amount of the carboxy groups of the water-insoluble crosslinked polymer A which is present in the ink of the present invention.

The content of the alkali metal ions in the ink of the present invention is preferably not less than 20 mol% and not more than 60 mol%, more preferably not less than 25 mol% and not more than 55 mol%, even more preferably not less than 30 mol% and not more than 55 mol%, and further even more preferably not less than 35 mol% and not more than 55 mol%, on the basis of the whole molar amount of the carboxy groups of the polymer A, from the viewpoint of improving storage stability and ejection stability of the resulting water-based ink and thereby providing a printed material having excellent water resistance.

In the case where any alkali metal ions are used upon controlling the carboxy groups in the polymer a before being crosslinked, and any alkali metal ions are newly added upon preparation of the ink of the present invention, the content of the alkali metal ions in the ink of the present invention means mol% of a sum of all of the aforementioned alkali metal ions present in the ink as calculated on the basis of the whole molar amount of the carboxy groups of the polymer A present the ink of the present invention.

(Ammonium ions in Ink of the Present Invention)

In the ink of the present invention, the alkali metal ions are present, and it is preferred that in addition to the alkali metal ions, the ammonium ions are also allowed to be present simultaneously in the ink. The ammonium ions are preferably derived from the aqueous ammonia.

The amount of the aqueous ammonia used in the ink of the present invention as the content of the ammonium ions therein is not less than 55 mol%, preferably not less than 60 mol%, more preferably not less than 65 mol%, and even more preferably not less than 70 mol%, and is also not more than 145 mol%, preferably not more than 140 mol%, more preferably not more than 135 mol% and even more preferably not more than 130 mol%, on the basis of the whole molar amount of the carboxy groups of the water-insoluble crosslinked polymer particles present in the ink of the present invention, from the viewpoint of improving storage stability and ejection stability of the resulting water-based ink and thereby providing a printed material having excellent water resistance.

In the ink of the present invention, pigment-free polymer particles formed of an acrylic resin, a styrene-acrylic resin, etc., may be added thereto. Upon adding the pigment-free polymer particles to the ink, the polymer may be neutralized with the ammonium ions such that the content of the ammonium ions in the ink is controlled to the range of not less than 55 mol% and not more than 145 mol% on the basis of the whole molar amount of the carboxy groups of the polymer A present in the ink.

From the same viewpoint as described above, the total content of the alkali metal ions and the ammonium ions in the ink of the present invention is not less than 100 mol%, preferably not less than 105 mol%, more preferably not less than 110 mol%, and even more preferably not less than 115 mol%, and is also not more than 185 mol%, preferably not more than 180 mol%, more preferably not more than 175 mol%, and even more preferably not more than 170 mol%, on the basis of the whole molar amount of the carboxy groups of the polymer constituting the water-insoluble crosslinked polymer particles present in the ink of the present invention.

<Organic Solvent in Ink of the Present Invention>

The organic solvent used in the ink of the present invention may be in the form of either a liquid or a solid as measured at 25 °C. However, the organic solvent is preferably such a water-soluble organic solvent that when dissolving the organic solvent in 100 mL of water at 25 °C, the amount of the organic solvent dissolved in the water is not less than 10 mL.

The boiling point of the organic solvent is preferably not lower than 100 °C, more preferably not lower than 110 °C, even more preferably not lower than 120 °C, and further even more preferably not lower than 140 °C, and is also preferably not higher than 260 °C, more preferably not higher than 250 °C, and even more preferably not higher than 240 °C, from the viewpoint of improving storage stability of the resulting water-based ink, etc.

Examples of the water-soluble organic solvent include glycol ethers, such as alkylene glycol ethers, etc., polyhydric alcohols, such as propylene glycol, etc., amide compounds, and the like. Of these water-soluble organic solvents, preferred are alkylene glycol ethers, and more preferred are monoalkylene glycol ethers.

As the monoalkylene glycol ethers, there may be mentioned at least one compound selected from the group consisting of ethylene glycol monomethyl ether, ethylene glycol monoethyl ether, ethylene glycol monoisopropyl ether, ethylene glycol monobutyl ether, ethylene glycol monoisobutyl ether, diethylene glycol monomethyl ether, diethylene glycol monoethyl ether, diethylene glycol monoisopropyl ether, diethylene glycol monopropyl ether, diethylene glycol monoisobutyl ether, diethylene glycol monobutyl ether, propylene glycol monomethyl ether, propylene glycol monoethyl ether, propylene glycol monobutyl ether, dipropylene glycol monomethyl ether, dipropylene glycol monobutyl ether and the like.

Of these monoalkylene glycol ethers, from the same viewpoint as described above, preferred are ethylene glycol monobutyl ether, diethylene glycol monoethyl ether, diethylene glycol monoisopropyl ether, propylene glycol monomethyl ether, propylene glycol monobutyl ether, and dipropylene glycol monomethyl ether, and more preferred is dipropylene glycol monomethyl ether.

<Other Additives, etc.>

Examples of the surfactant include a nonionic surfactant, an anionic surfactant, an amphoteric surfactant, and the like. Of these surfactants, preferred is a nonionic surfactant, and more preferred is at least one surfactant selected from the group consisting of an acetylene glycol-based surfactant and a polyether-modified silicone-based surfactant.

Examples of commercially available products of the acetylene glycol-based surfactant include "SURFYNOL" series products available from Air Products & Chemicals, Inc., and "ACETYLENOL" series products available from Kawaken Fine Chemicals Co., Ltd., and the like.

Specific examples of the polyether-modified silicone-based surfactant include KF series products available from Shin-Etsu Chemical Industry Co., Ltd., "SILFACE SAG" available from Nissin Chemical Industry Co., Ltd., "BYK" series products available from BYK Chemie Japan K.K., and the like.

Examples of the other additives that may be used in the method for producing the ink of the present invention include a fixing aid, a humectant, a wetting agent, a penetrant, a viscosity controller, a defoaming agent, an antiseptic agent, a mildew-proof agent, a rust preventive, and the like.

Examples of the fixing aid include an emulsion containing water-insoluble polymer particles. Examples of the water-insoluble polymer particles include particles of condensation-based resins, such as polyurethanes, polyesters, etc.; and vinyl-based resins, such as (meth)acrylic resins, styrene-based resins, styrene-(meth)acrylic resins, butadiene-based resins, styrene-butadiene-based resins, vinyl chloride-based resins, vinyl acetate-based resins, acrylic-silicone-based resins, etc.

The contents of the respective components in the ink of the present invention which is produced by the aforementioned production method as well as properties of the ink are as follows.

(Content of Pigment in Ink of the Present Invention)

The content of the pigment in the ink of the present invention is preferably not less than 1% by mass, more preferably not less than 2% by mass, and even more preferably not less than 4% by mass from the viewpoint of improving optical density of the ink of the present invention upon printing, and is also preferably not more than 15% by mass, more preferably not more than 10% by mass, and even more preferably not more than 8% by mass from the viewpoint of improving ejection stability and storage stability of the resulting ink.

(Content of Water-Insoluble Crosslinked Polymer in Ink of the Present Invention)

The content of the water-insoluble crosslinked polymer in the ink of the present invention is preferably not less than 2% by mass, more preferably not less than 3% by mass, and even more preferably not less than 4% by mass, and is also preferably not more than 15% by mass, more preferably not more than 10% by mass, and even more preferably not more than 8% by mass, on the basis of the whole amount of the ink of the present invention.

(Content of Pigment-Containing Crosslinked Polymer Particles in Ink of the Present Invention)

The content of the pigment-containing crosslinked polymer particles in the ink of the present invention as calculated in terms of a total content of the pigment and the water-insoluble crosslinked polymer is preferably not less than 3% by mass, more preferably not less than 5% by mass, and even more preferably not less than 8% by mass, and is also preferably not more than 30% by mass, more preferably not more than 20% by mass, and even more preferably not more than 16% by mass, on the basis of the whole amount of the ink of the present invention.

(Content of Organic Solvent in Ink of the Present Invention)

The content of the organic solvent in the ink of the present invention is preferably not less than 15% by mass, more preferably not less than 20% by mass, and even more preferably not less than 22% by mass, and is also preferably not more than 40% by mass, more preferably not more than 35% by mass, and even more preferably not more than 35% by mass, on the basis of the whole amount of the ink of the present invention, from the viewpoint of improving ejection stability of the resulting ink.

(Content of Water in Ink of the Present Invention)

The content of water in the ink of the present invention is preferably not less than 25% by mass, more preferably not less than 30% by mass, and even more preferably not less than 35% by mass, and is also preferably not more than 75% by mass, more preferably not more than 70% by mass, even more preferably not more than 65% by mass, and further even more preferably not more than 60% by mass, on the basis of the whole amount of the ink of the present invention, from the viewpoint of improving ejection stability of the resulting ink.

(Properties of Ink of the Present Invention)

The viscosity of the ink of the present invention as measured at 32 °C is preferably not less than 2 mPa·s, more preferably not less than 3 mPa·s, and even more preferably not less than 5 mPa·s, and is also preferably not more than 12 mPa·s, more preferably not more than 9 mPa·s, and even more preferably not more than 7 mPa·s, from the viewpoint of improving storage stability of the resulting ink.

The pH value of the ink of the present invention is preferably not less than 7, more preferably not less than 7.5, and even more preferably not less than 7.9 from the viewpoint of improving storage stability of the resulting ink, and is also preferably not more than 10, more preferably not more than 9.5, and even more preferably 9.2 from the viewpoint of improving resistance of members to the ink and suppressing skin irritation.

[Ink-Jet Printing Method]

The ink of the present invention may be loaded into a conventionally known ink-jet printing apparatus, and ejected therefrom in the form of droplets of the ink onto a printing medium, so that it is possible to obtain printed images, etc., thereon.

The ink-jet printing apparatus may be either a thermal type or a piezoelectric type. The ink of the present invention is preferably used as a water-based ink for ink-jet printing using the piezoelectric-type ink-jet printer.

Examples of the printing medium that may be used herein include a high-water absorbing plain paper, a low-water absorbing coated paper and a no-water absorbing resin film. Examples of the coated paper include a versatile glossy coated paper, a multi-color foam glossy coated paper, etc. Examples of the resin film include a polyester film, a polyvinyl chloride film, a polypropylene film, a polyethylene film and the like.

EXAMPLES

In the following Examples and Comparative Examples, the "part(s)" and "%" indicate "part(s) by mass" and "% by mass", respectively, unless otherwise specified. Meanwhile, the respective properties, etc., were measured by the following methods.

(1) Measurement of Number-Average Molecular Weight of Polymer

The number-average molecular weight of the polymer was measured by gel chromatography [GPC apparatus: "HLC-8320GPC" available from Tosoh Corporation; columns: "TSKgel Super AWM-H", "TSKgel Super AW3000", and "TSKgel guardcolumn Super AW-H" all available from Tosoh Corporation; flow rate: 0.5 mL/min] using a solution prepared by dissolving phosphoric acid and lithium bromide in *N,N*-dimethylformamide such that concentrations of phosphoric acid and lithium bromide in the resulting solution were 60 mmol/L and 50 mmol/L, respectively, as an eluent, and using kits of monodisperse polystyrenes having previously known molecular weights [PStQuick B (F-550, F-80, F-10, F-1, A-1000), PStQuick C(F-288, F-40, F-4, A-5000, A-500] all available from Tosoh Corporation as a reference standard substance.

As a sample to be measured, there was used a dispersion prepared by mixing 0.1 g of the resin with 10 mL of the aforementioned eluent in a glass vial, stirring the resulting mixture at 25 °C for 10 hours with a magnetic stirrer, and then subjecting the mixture to filtration treatment through a syringe filter "DISMIC-13HP" (PTFE; 0.2 μm) available from Advantec Co., Ltd.

(2) Measurement of Acid Value of Polymer

In an automatic potentiometric titrator (power burette; "Model No.: APB-610") available from Kyoto Electronics Manufacturing Co., Ltd., the polymer was dissolved in a titrant solvent prepared by mixing toluene and acetone (2:1), and the resulting solution was subjected to titration with a 0.1N potassium hydroxide/ethanol solution by a potentiometric titration method until reaching an end point of the titration observed as an inflection point on the titration curve. The acid value of the polymer was calculated from an amount (titer) of the potassium hydroxide solution used in the titration until reaching the end point.

(3) Measurement of Solid Contents of Water Dispersion

Using an infrared moisture meter "FD-230" available from Kett Electric Laboratory, 5 g of a sample to be measured was dried at a drying temperature of 150 °C under a measuring mode 96 (monitoring time: 2.5 minutes/variation range: 0.05%), and then a water content (%) of the sample to be measured was measured to calculate a solid content thereof according to the following formula.

$$\text{Solid Content (\%)} = 100 - \text{Water Content (\%) of Sample to be Measured}$$

Preparation Example 1 (Preparation of Water-Insoluble Polymer a-1)

Thirty one parts of acrylic acid and 69 parts of styrene were mixed to prepare a monomer mixture solution. Ten parts of MEK and 0.2 part of 2-mercaptoethanol (polymerization chain transfer agent) as well as 10% of the monomer mixture solution prepared above were charged into a reaction container and mixed with each other, and then an inside atmosphere of the reaction container was fully replaced with nitrogen gas.

Separately, a mixed solution prepared by mixing remaining 90% of the monomer mixture solution, 0.13 part of the aforementioned polymerization chain transfer agent, 30 parts of MEK and 1.1 parts of an azo-based radical polymerization initiator "V-65" (tradename; 2,2'-azobis(2,4-dimethylvaleronitrile)) available from FUJIFILM Wako Pure Chemical Corporation was charged into a dropping funnel. In a nitrogen atmosphere, the monomer mixture solution in the reaction container was heated to 65 °C while stirring, and then the mixed solution in the dropping funnel was added dropwise thereinto over 3 hours.

After the elapse of 2 hours from completion of the dropwise addition while maintaining the resulting mixed solution at 65 °C, a solution prepared by dissolving 0.1 part of the aforementioned polymerization initiator in 2 parts of MEK was added to the reaction container, and the resulting reaction solution was further aged at 65 °C for 2 hours and then at 70 °C for 2 hours. Thereafter, the obtained reaction solution was dried under reduced pressure, thereby obtaining a water-insoluble polymer a-1 (number-average molecular weight: 19000; acid value: 241 mgKOH/g).

Preparation Examples 2 to 6 (Preparation of Water-Insoluble Polymers a-2 to a-6)

The same procedure as in Preparation Example 1 was repeated except that the amounts of the respective monomer components were changed to those shown in Table 1, thereby obtaining water-insoluble polymers a-2 to a-6. The results are shown in Table 1.

TABLE 1

| | | 1 | 2 | Preparation 3 | Examples 4 | 5 | 6 |
|---|---|---|---|---|---|---|---|
| Kind of polymer | | a-1 | a-2 | a-3 | a-4 | a-5 | a-6 |
| Monomer composition | (a-1) Acrylic acid (part(s)) | 31 | 21 | 26 | 34 | 17 | 36 |
| | (a-2) Styrene (part(s)) | 69 | 79 | 74 | 66 | 83 | 64 |

(continued)

| Results | | 1 | 2 | Preparation 3 | Examples 4 | 5 | 6 |
|---|---|---|---|---|---|---|---|
| | Number-average molecular weight | 19,000 | 24,000 | 21,000 | 15,000 | 32,000 | 11,000 |
| | Acid value | 241 | 163 | 202 | 264 | 132 | 280 |

Example 1 (Production of Water-Based Ink)

(1) Preparation of Pigment Water Dispersion Liquid

One hundred parts of the water-insoluble polymer a-1 obtained in Preparation Example 1 as the polymer were mixed with 78.6 parts of MEK, and the resulting mixture was further mixed with 24.7 parts of a 5N sodium hydroxide aqueous solution (solid sodium hydroxide content: 16.9%) as sodium ions for neutralizing carboxy groups of the polymer a-1 to subject the polymer to neutralization treatment (neutralization degree: 24.7 mol%).

The obtained polymer solution was further mixed with 800 parts of ion-exchanged water, and 100 parts of a cyan pigment "TGR-SD" (tradename; C.I. Pigment Blue 15:3) available from DIC Corporation were added thereto. The resulting dispersion was stirred at 20 °C for 60 minutes using a disper "ULTRA DISPER" (tradename) available from Asada Iron Works Co., Ltd., under the condition of operating blades of the disper at a rotating speed of 7000 rpm. The resulting mixture was subjected to dispersion treatment under a pressure of 200 MPa using "Microfluidizer" (tradename) available from Microfluidics Corporation by passing the dispersion through the device 10 times, thereby obtaining a pigment dispersion liquid (solid content: 18.1%; pigment concentration: 9%).

(2) Crosslinking Treatment of Pigment Water Dispersion

The pigment dispersion liquid obtained in the above (1) was mixed with 250 parts of ion-exchanged water. After the resulting solution was stirred, MEK was completely removed under reduced pressure at 60 °C from the resulting solution, followed by further removing a part of water therefrom to adjust a solid content of the solution to 20% (pigment concentration: 10%). Thereafter, 23.8 parts of trimethylolpropane polyglycidyl ether "DENACOL EX-321" (tradename; epoxy value: 140) available from Nagase ChemteX Corporation as an epoxy crosslinking agent were added to the solution, followed by hermetically sealing a reaction container. The contents of the reaction container were heated at 70 °C for 5 hours while stirring with a stirrer to react the crosslinking agent with the carboxy groups of the polymer, thereby obtaining a pigment water dispersion of water-insoluble crosslinked acrylic polymer particles having a crosslinked structure derived from the polyglycidyl ether compound of trimethylolpropane as a polyhydric alcohol containing a hydrocarbon group having not less than 3 and not more than 8 carbon atoms.

(3) Addition of Ammonium Ions; Preparation of Ink

The pigment water dispersion obtained in the above (2) was allowed to stand for 5 hours to lower the temperature thereof up to room temperature, and then 14.2 pars of 25% aqueous ammonia as an additional neutralizing agent, 540 parts of dipropylene glycol monomethyl ether available from FUJIFILM Wako Pure Chemical Corporation as an organic solvent, and 15 parts of an acetylene glycol-based nonionic surfactant "SURFYNOL 104" (tradename; 2,4,7,9-tetramethyl-5-decyne-4,7-diol) available from Air Products & Chemicals, Inc., were added to the dispersion, followed by further adding ion-exchanged water thereto such that a total amount of the obtained dispersion was 2000 parts. The obtained dispersion was subjected to filtration treatment using a 25 mL-capacity needleless syringe available from Terumo Corporation fitted with a 5 $\mu$m-pore size filter (acetyl cellulose membrane; outer diameter: 2.5 cm) available from FUJIFILM Wako Pure Chemical Corporation, thereby obtaining a water-based ink 1 (content of pigment-containing crosslinked polymer particles: 10%).

In the resulting water-based ink 1, the acid value of the water-insoluble crosslinked polymer particles was 118 mg KOH/g, 40 mol% of the carboxy groups of the polymer particles were neutralized with the sodium ions, and the ink further contained the ammonium ions in an amount corresponding to 80 mol% of the carboxy groups of the polymer particles.

Examples 2 to 16 and Comparative Examples 1 to 10 (Production of Water-Based Inks)

The same procedure as in Example 1 was repeated except that the production conditions were changed to those shown in Tables 2-1 and 3, thereby obtaining water-based inks 2 to 16 and 31 to 40. The details are shown in Tables 2-1 and 3.

Example 17

(1) Preparation of Pigment Water Dispersion Liquid

The same procedure as in Example 1(1) was repeated except that 100 parts of the water-insoluble polymer a-1 were changed to 40 parts thereof, thereby obtaining a pigment dispersion liquid (solid content: 13.4%; pigment concentration: 9.6%).

(2) Crosslinking Treatment of Pigment Water Dispersion

The pigment dispersion liquid obtained in the above (1) was mixed with 250 parts of ion-exchanged water. After the resulting solution was stirred, MEK was completely removed under reduced pressure at 60 °C from the resulting solution, followed by further removing a part of water therefrom to adjust a solid content of the solution to 14% (pigment concentration: 10%). Thereafter, 9.52 parts of trimethylolpropane polyglycidyl ether "DENACOL EX-321" (tradename; epoxy value: 140) available from Nagase ChemteX Corporation as an epoxy crosslinking agent were added to the solution, followed by hermetically sealing a reaction container. The contents of the reaction container were heated at 70 °C for 5 hours while stirring with a stirrer to react the crosslinking agent with the carboxy groups of the polymer, thereby obtaining a pigment water dispersion of water-insoluble crosslinked acrylic polymer particles having a crosslinked structure derived from the polyglycidyl ether compound of trimethylolpropane as a polyhydric alcohol containing a hydrocarbon group having not less than 3 and not more than 8 carbon atoms which were neutralized with sodium ions (acid value: 118 mgKOH/g).

(3) Preparation of Dispersion of Pigment-Free Water-Insoluble Crosslinked Polymer

Sixty parts of the water-insoluble polymer a-1 obtained in Preparation Example 1 were mixed with 100 parts of ion-exchanged water, and further mixed with 14.2 parts of 25% aqueous ammonia, and the resulting mixture was charged into a threaded neck glass bottle and stirred at 90 °C for 3 hours with a magnetic stirrer to make the mixture self-emulsified. Then, 14.28 parts of trimethylolpropane polyglycidyl ether were added to the glass bottle, followed by hermetically sealing the glass bottle. The contents of the glass bottle were heated at 90 °C for 3 hours while stirring with a stirrer, and after the elapse of 3 hours, the temperature of the contents of the glass bottle was lowered up to room temperature, thereby obtaining a dispersion of pigment-free water-insoluble crosslinked polymer particles which were neutralized with ammonium ions (acid value: 118 mgKOH/g).

(4) Preparation of Ink

The pigment water dispersion obtained in the above (1) was allowed to stand for 5 hours to lower the temperature thereof up to room temperature, and then the whole amount of the dispersion of the pigment-free water-insoluble polymer particles obtained in the above (3), 540 parts of dipropylene glycol monomethyl ether as an organic solvent, and 15 parts of an acetylene glycol-based nonionic surfactant "SURFYNOL 104" were added to the pigment water dispersion, followed by further adding ion-exchanged water thereto such that a total amount of the obtained dispersion was 2000 parts. Then, the obtained dispersion was heated at 90 °C for 3 hours while stirring with a stirrer. After the elapse of 3 hours, the temperature of the dispersion was lowered up to room temperature, and the dispersion was subjected to filtration treatment using a 25 mL-capacity needleless syringe available from Terumo Corporation fitted with a 5 $\mu$m-pore size filter (acetyl cellulose membrane; outer diameter: 2.5 cm) available from FUJIFILM Wako Pure Chemical Corporation, thereby obtaining a water-based ink 17 (content of pigment-containing crosslinked polymer particles: 10%).

In the resulting water-based ink 17, the acid value of the water-insoluble crosslinked polymer particles was 118 mg KOH/g, 40 mol% of the carboxy groups of the polymer were neutralized with the sodium ions, and the ink further contained the ammonium ions in an amount corresponding to 80 mol% of the carboxy groups of the polymer.

Examples 18 to 22

The same procedure as in Example 11 was repeated except that the dipropylene glycol monomethyl ether used as the organic solvent was replaced with the respective organic solvents shown in Table 2-2, thereby obtaining water-based inks 18 to 22. The results are shown in Table 2-2.

The respective water-based inks obtained above were evaluated with respect to storage stability of the inks, water resistance of an ink-jet printed material obtained using the inks, and ejection stability of the inks when used upon ink-jet printing, by the following methods. The results are shown in Table 2-1, Table 2-2 and Table 3.

<Evaluation of Storage Stability of Water-Based Ink>

Forty grams of the respective water-based inks obtained above were charged into a 50 mL screw vial. After hermetically sealing the screw vial, the screw vial filled with the respective inks was stored in a thermostatic oven adjusted to a temperature of 70 °C for 4 days.

The rate of change in average particle size of the polymer particles contained in the ink between before storage and after storage was determined according to the following formula to evaluate storage stability of the ink.

$$\text{Rate of Change in Average Particle Size (\%)} = [(\text{Average Particle Size of Polymer Particles in Ink After Storage})/(\text{Initial Average Particle Size of Polymer Particles in Ink Before Storage})] \times 100$$

As the rate of change in average particle size of the polymer particles becomes closer to 100%, the ink is more excellent in storage stability.

<Evaluation of Ink-Jet Printing>

(1) Preparation of Ink-Jet Printed Material

Images were printed on an A4-size coated paper "OK Topcoat +" (tradename) available from Oji Paper Co., Ltd., using the respective water-based inks by the following ink-jet printing method.

(Ink-Jet Printing Method)

Under the environmental conditions of a temperature of 25±1 °C and a relative humidity of 30±5%, the respective water-based inks were loaded into a print evaluation apparatus available from Trytech Co., Ltd., equipped with an ink-jet print head "KJ4B-HD06MHG-STDV" (tradename; piezoelectric type) available from Kyocera Corporation.

The operating conditions of the print evaluation apparatus were set to an applied print head voltage of 26 V, a drive frequency of 10 kHz, an ejected liquid droplet amount of 12 pL, a print head temperature of 32 °C, a resolution of 600 dpi, the number of ink shots for flushing before being ejected of 200 shots, and a negative pressure of -4.0 kPa. The printing medium was fixedly mounted to a transportation table of the apparatus under reduced pressure such that the longitudinal direction of the printing medium was aligned with a transportation direction thereof. A printing command was transmitted to the aforementioned print evaluation apparatus to print gradation images having a Duty of from 0 to 100% at every 5% on the printing medium to thereby obtain a printed material.

(2) Evaluation of Ejection Stability

After preparing the printed material in the above (1), the printer was stopped for 30 minutes to expose the print head to atmospheric air. After the elapse of 30 minutes, the ink was once purged from the ink-jet print head. After wiping the print head, the operation of the printer was started again to observe conditions of the print head concerning whether or not any missing nozzles were present. The nozzle restoration rate (%) was calculated according to the following formula to evaluate ejection stability of the ink.

$$\text{Nozzle Restoration Rate (\%)} = (\text{Number of Normal Ink Ejection Nozzles/Whole Number of Nozzles}) \times 100$$

It was recognized that as the nozzle restoration rate (%) was increased, the ink was more excellent in nozzle restorability. If the nozzle restoration rate was not less than 90%, the ink was practically usable.

(3) Evaluation of Water Resistance

After allowing the printed material obtained in the above (1) to stand for 3 minutes, the printed material was immersed in a stainless steel vat filled with 1000 mL of ion-exchanged water for 10 seconds, and the gradation images having a Duty of from 0 to 100% at every 5% on the printed material were sequentially lightly rubbed with fingers. Then, the percent value of the Duty portion of the respective gradation images where any peeling was observed was recorded as a numerical value for evaluation of water resistance of the ink.

It was recognized that as the percent value of the Duty portion that was free of peeling was increased, the water resistance of the ink became higher. If the numerical value for evaluation of water resistance of the ink was not less than 50%, the ink was practically usable.

TABLE 2-1

| | | | Examples | | | | | | | | | | | | | | | |
|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 | 16 | 17 |
| Kind of water-based ink | | | 1 | 2 | 3 | 4 | 5 | 6 | 7 | 8 | 9 | 10 | 11 | 12 | 13 | 14 | 15 | 16 | 17 |
| Produc-tion con-ditions of ink (2000 parts in total) | Kind of polymer er | a-1 (acid value: 241) | 100 | 100 | 100 | 100 | | | | | | | 100 | | | | 100 | 100 | 100 |
| | | a-2 (acid value: 163) | | | | | 100 | 100 | | | | | | 100 | | | | | |
| | | a-3 (acid value: 202) | | | | | | | 100 | 100 | | | | | 100 | | | | |
| | | a-4 (acid value: 264) | | | | | | | | | 100 | 100 | | | | | | | |
| | | a-6 (acid val-ue: 280) 5N | | | | | | | | | | | | | | 100 | | | |
| | Neutraliz-ing agent | 5N NaOH (on an as-is basis) | 24.7 | 16.6 | 70 | 26.0 | 170 | 11.5 | 17.2 | 13.8 | 31.5 | 14.0 | 28.8 | 19.5 | 22.4 | 33.6 | 19.0 | 100 | 24.7 |
| | Piament | PB 15:3 | 100 | 100 | 100 | 100 | 100 | 100 | 100 | 100 | 100 | 100 | 100 | 100 | 100 | 100 | 100 | 100 | 100 |
| | Crosslinking ing agent | "DENACOL EX-321" | 23.8 | 35.7 | 35.7 | 35.7 | 15.8 | 23.7 | 25.0 | 29.9 | 19.3 | 45.2 | 17.8 | 11.9 | 17.4 | 20.8 | 35.7 | 35.7 | 23.8 |
| | agent Ad-ditional neutraliz-ing | 25% Ammo-nia | 14.2 | 9.5 | 15.9 | 9.8 | 9.7 | 6.6 | 9.9 | 8.0 | 18.2 | 8.1 | 16.5 | 11.2 | 12.9 | 19.0 | 16.0 | 9.6 | 14.2 |
| | Dip mon ropylene glycol monomethyl ether | | 540 | 540 | 540 | 540 | 540 | 540 | 540 | 540 | 540 | 540 | 540 | 540 | 540 | 540 | 540 | 540 | 540 |
| | mon Noni omethyl ether ionic surfactant | | 15 | 15 | 15 | 15 | 15 | 15 | 15 | 15 | 15 | 15 | 15 | 15 | 15 | 15 | 15 | 15 | 15 |
| | Ion-e xchanged water | | Bal-ance | Bal-ance | Bal-ance | Bal-ance | Bal-ance | Bal-ance | Bal-ance | Bal-ance | Bal-ance | Bal-ance | Bal-ance | Bal-ance | Bal-ance | Bal-ance | Bal-ance | Bal-ance | Bal-ance |

EP 4 234 252 A1

17

| | | | Examples | | | | | | | | | | | | | | | | |
|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 | 16 | 17 |
| Properties of water-insoluble crosslinked polymer | Acid value (mgKOH/g) | | 118 | | | | | | | | 157 | 58 | 144 | 103 | 113 | 163 | 72 | 72 | 118 |
| | Ion content (mol%) | $Na^+$ | 40 | 40 | 17 | 63 | 40 | 40 | 40 | 40 | 40 | 40 | 40 | 40 | 40 | 40 | 46 | 20 | 40 |
| | | $NH_4^+$ | 80 | 80 | 133 | 82 | 80 | 80 | 80 | 80 | 80 | 80 | 80 | 80 | 80 | 80 | 134 | 84 | 80 |
| | | Total[1] | 120 | 120 | 150 | 145 | 120 | 120 | 120 | 120 | 120 | 120 | 120 | 120 | 120 | 120 | 180 | 104 | 120 |
| Evaluation results | Storage stability (%) | | 100 | 100 | 100 | 100 | 104 | 102 | 101 | 100 | 103 | 100 | 102 | 105 | 102 | 101 | 105 | 105 | 100 |
| | Ejection stability (%) | | 100 | 100 | 100 | 100 | 98 | 97 | 100 | 98 | 100 | 98 | 100 | 96 | 99 | 100 | 100 | 90 | 100 |
| | Water resistance (%) | | 70 | 60 | 65 | 55 | 80 | 85 | 70 | 75 | 70 | 70 | 80 | 65 | 85 | 65 | 65 | 80 | 70 |

Note *1: Total content (mol%) of $Na^+$ ions and $NH_4^+$ ions on the basis of the whole molar amount of carboxy groups of water-insoluble crosslinked polymer

EP 4 234 252 A1

TABLE 2-2

| | | | Examples | | | | |
|---|---|---|---|---|---|---|---|
| | | | 18 | 19 | 20 | 21 | 22 |
| Kind of water-based ink | | | 18 | 19 | 20 | 21 | 22 |
| Production conditions of ink (2000 parts in total) | Kind of polymer | a-1 (acid value: 241) | 100 | 100 | 100 | 100 | 100 |
| | Neutralizing agent | 5N NaOH (on an as-is basis) | 28.8 | 28.8 | 28.8 | 28.8 | 28.8 |
| | Pigment | PB 15:3 | 100 | 100 | 100 | 100 | 100 |
| | Crosslinking agent | "DENACOL EX-321" | 17.8 | 17.8 | 17.8 | 17.8 | 17.8 |
| | Additional | 25% Ammonia | 16.5 | 16.5 | 16.5 | 16.5 | 16.5 |
| | Ethylene glycol monobutyl ether | | 540 | | | | |
| | Diethylene glycol monoethyl ether | | | 540 | | | 440 |
| | Diethylene glycol monoisopropyl ether | | | | 540 | | |
| | Propylene glycol monomethyl ether | | | | | 540 | |
| | Propylene glycol monobutyl ether | | | | | | 100 |
| | Nonionic surfactant | | 15 | 15 | 15 | 15 | 15 |
| | Ion-exchanged water | | Balance | Balance | Balance | Balance | Balance |
| Properties of water-insoluble crosslinked polymer | Acid value (mgKOH/g) | | 144 | 144 | 144 | 144 | 144 |
| | Ion content (mol%) | $Na^+$ | 40 | 40 | 40 | 40 | 40 |
| | | $NH_4^+$ | 80 | 80 | 80 | 80 | 80 |
| | | Total[*1] | 120 | 120 | 120 | 120 | 120 |
| Evaluation results | Storage stability (%) | | 104 | 100 | 100 | 100 | 102 |
| | Ejection stability (%) | | 99 | 100 | 100 | 98 | 100 |
| | Water resistance (%) | | 90 | 75 | 70 | 100 | 80 |

Note *1: Total content (mol%) of $Na^+$ ions and $NH_4^+$ ions on the basis of the whole molar amount of carboxy groups of water-insoluble crosslinked polymer

TABLE 3

| | | | Comparative Examples | | | | | | | | | |
|---|---|---|---|---|---|---|---|---|---|---|---|---|
| | | | 1 | 2 | 3 | 4 | 5 | 6 | 7 | 8 | 9 | 10 |
| Kind of water-based ink | | | 31 | 32 | 33 | 34 | 35 | 36 | 37 | 38 | 39 | 40 |
| Production conditions of ink (2000 parts in total) | Kind of polymer | a-1 (acid value: 241) | 100 | 100 | 100 | 100 | 100 | 100 | | | 100 | 100 |
| | | a-5 (acid value: 132) | | | | | | | 100 | | | |
| | | a-6 (acid value: 280) | | | | | | | | 100 | | |
| | Neutralizing agent | 5N NaOH (on an as-is | 5.0 | 28.0 | 7.0 | 27.0 | 20.0 | 9.0 | 8.8 | 37.5 | 16.6 | |
| | | Triethanolamine | | | | | | | | | | 10.6 |
| | Pigment | PB 15:3 | 100 | 100 | 100 | 100 | 100 | 100 | 100 | 100 | 100 | 100 |
| | Crosslinking | EX-321" | 35.7 | 35.7 | 35.7 | 35.7 | 35.7 | 35.7 | 20 | 15.2 | 35.7 | 35.7 |
| | Additional neutralizing | "DENACOL 25% Ammonia | 16.7 | 9.5 | 17.9 | 6.0 | 17.0 | 9.0 | 5.0 | 21.1 | | |
| | | Triethanolamine | | | | | | | | | 20.0 | 20.0 |
| | Dipropylene glycol monomethyl ether | | 540 | 540 | 540 | 540 | 540 | 540 | 540 | 540 | 540 | 540 |
| | Nonionic surfactant | | 15 | 15 | 15 | 15 | 15 | 15 | 15 | 15 | 15 | 15 |
| | Ion-exchanged water | | Balance | Balance | Balance | Balance | Balance | Balance | Balance | Balance | Balance | Balance |
| Properties of water-insoluble crosslinked polymer | Acid value (mgKOH/g) | | 72 | 72 | 72 | 72 | 72 | 72 | 43 | 190 | 72 | 72 |
| | Ion content (mol%) | $Na^+$ | 12 | 67 | 17 | 65 | 48 | 22 | 40 | 40 | 40 | |
| | | $NH_4^+$ | 140 | 80 | 150 | 50 | 142 | 75 | 80 | 80 | | |
| | | Triethanol | | | | | | | | | 77 | 120 |
| | | Total*1 | 152 | 147 | 167 | 115 | 190 | 97 | 120 | 120 | 118 | 120 |
| Evaluation results | Storage stability (%) | | 110 | 100 | 108 | 100 | 112 | 105 | 108 | 104 | 100 | 103 |
| | Ejection stability (%) | | 90 | 100 | 92 | 100 | 100 | 75 | 83 | 100 | 100 | 93 |
| | Water resistance (%) | | 80 | 25 | 55 | 35 | 50 | 75 | 75 | 35 | 45 | 45 |

Note *1: Total content (mol%) of $Na^+$ ions and $NH_4$ ions on the basis of the whole molar amount of carboxy groups of water-insoluble crosslinked polymer

EP 4 234 252 A1

From Table 2-1, Table 2-2 and Table 3, it was confirmed that the water-based inks obtained in Examples 1 to 22 were excellent in storage stability and ejection stability, and were capable of providing a printed material having excellent water resistance, as compared with the water-based inks obtained in Comparative Examples 1 to 10.

Industrial Applicability

According to the present invention, it is possible to obtain a water-based ink for ink-jet printing which is excellent in storage stability and ejection stability, and is capable of providing a printed material having excellent water resistance. The water-based ink for ink-jet printing according to the present invention is useful, in particular, for forming images on a low-water absorbing printing medium by an ink-jet printing method.

**Claims**

1. A water-based ink for ink-jet printing, comprising a pigment, water-insoluble crosslinked polymer particles, an organic solvent, and water, in which:

   the water-insoluble crosslinked polymer particles are constituted of a polymer A having a crosslinked structure, which comprises carboxy groups and has an acid value of not less than 45 mgKOH/g and not more than 180 mgKOH/g;
   the ink comprises alkali metal ions in an amount of not less than 15 mol% and not more than 65 mol%, and ammonium ions in an amount of not less than 55 mol% and not more than 145 mol%, both on the basis of a whole molar amount of the carboxy groups of the polymer A present in the ink; and
   a total content of the alkali metal ions and the ammonium ions in the ink is not less than 100 mol% and not more than 185 mol% on the basis of the whole molar amount of the carboxy groups of the polymer A.

2. The water-based ink for ink-jet printing according to claim 1, wherein the alkali metal ion is at least one ion selected from the group consisting of a sodium ion and a potassium ion.

3. The water-based ink for ink-jet printing according to claim 1 or 2, wherein the crosslinked structure of the water-insoluble crosslinked polymer particles is derived from a polyglycidyl ether compound of a polyhydric alcohol comprising a hydrocarbon group having not less than 3 and not more than 8 carbon atoms.

4. The water-based ink for ink-jet printing according to any one of claims 1 to 3, wherein the organic solvent comprises a glycol ether.

5. The water-based ink for ink-jet printing according to any one of claims 1 to 4, wherein a content of the organic solvent in the ink is not less than 15% by mass and not more than 40% by mass.

6. The water-based ink for ink-jet printing according to any one of claims 1 to 5, wherein the pigment is in the form of pigment-containing water-insoluble crosslinked polymer particles.

7. The water-based ink for ink-jet printing according to any one of claims 1 to 6, wherein a content of the water-insoluble crosslinked polymer in the ink is not less than 2% by mass and not more than 15% by mass.

<table>
<tr><td colspan="2" align="center">**INTERNATIONAL SEARCH REPORT**</td><td colspan="2">International application No.<br><br>**PCT/JP2021/039382**</td></tr>
<tr><td colspan="4">**A. CLASSIFICATION OF SUBJECT MATTER**<br><br>***B41J 2/01***(2006.01)i; ***C09D 11/326***(2014.01)i; ***C09D 11/38***(2014.01)i; ***B41M 5/00***(2006.01)i<br>FI: C09D11/326; C09D11/38; B41J2/01 501; B41M5/00 120<br><br>According to International Patent Classification (IPC) or to both national classification and IPC</td></tr>
<tr><td colspan="4">**B. FIELDS SEARCHED**</td></tr>
<tr><td colspan="4">Minimum documentation searched (classification system followed by classification symbols)<br><br>B41J2/01; B41J2/165-2/20; B41J2/21-2/215; C09D11/00-13/00; B41M5/00; B41M5/50; B41M5/52</td></tr>
<tr><td colspan="4">Documentation searched other than minimum documentation to the extent that such documents are included in the fields searched<br><br>Published examined utility model applications of Japan 1922-1996<br>Published unexamined utility model applications of Japan 1971-2022<br>Registered utility model specifications of Japan 1996-2022<br>Published registered utility model applications of Japan 1994-2022</td></tr>
<tr><td colspan="4">Electronic data base consulted during the international search (name of data base and, where practicable, search terms used)</td></tr>
<tr><td colspan="4">**C. DOCUMENTS CONSIDERED TO BE RELEVANT**</td></tr>
<tr><td>Category*</td><td colspan="2">Citation of document, with indication, where appropriate, of the relevant passages</td><td>Relevant to claim No.</td></tr>
<tr><td>X</td><td colspan="2">JP 2008-150535 A (KAO CORP.) 03 July 2008 (2008-07-03)<br>claims 1-4, 6-8, paragraphs [0001], [0005], [0011], [0026], [0041], [0043], example 2, tables 1, 2</td><td>1-7</td></tr>
<tr><td>A</td><td colspan="2">JP 2009-91525 A (KAO CORP.) 30 April 2009 (2009-04-30)<br>claims 1-10, paragraphs [0005], [0012], [0028], [0034], [0035], examples 1-7, tables 1, 2</td><td>1-7</td></tr>
<tr><td>A</td><td colspan="2">JP 2009-275125 A (KAO CORP.) 26 November 2009 (2009-11-26)<br>claims 1, 3-7, paragraphs [0005], [0017], [0035], [0036], [0047], examples 1-5, tables 1, 2</td><td>1-7</td></tr>
<tr><td>A</td><td colspan="2">JP 2008-63500 A (KAO CORP.) 21 March 2008 (2008-03-21)<br>claims 1-2, 9-15, paragraphs [0011], [0026], [0027], [0037], examples 1-5, tables 1-3</td><td>1-7</td></tr>
<tr><td>A</td><td colspan="2">WO 2019/078151 A1 (KAO CORP.) 25 April 2019 (2019-04-25)<br>claims 1, 7, 9-15, paragraphs [0006], [0007], [0010], [0021], [0022], [0041]-[0043], [0050]-[0053], examples 1-4, tables 1, 2</td><td>1-7</td></tr>
<tr><td>A</td><td colspan="2">JP 2003-82024 A (SEIKO EPSON CORP.) 19 March 2003 (2003-03-19)<br>claims 1-9, 25-28, paragraphs [0019]-[0021],[0053], [0054], [0062], examples (inks A1-A36), tables A1-A6</td><td>1-7</td></tr>
<tr><td colspan="2">☐ Further documents are listed in the continuation of Box C.</td><td colspan="2">☑ See patent family annex.</td></tr>
<tr><td colspan="2">* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed</td><td colspan="2">"T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more such documents, such combination being obvious to a person skilled in the art<br>"&" document member of the same patent family</td></tr>
<tr><td colspan="2">Date of the actual completion of the international search<br><br>**06 January 2022**</td><td colspan="2">Date of mailing of the international search report<br><br>**18 January 2022**</td></tr>
<tr><td colspan="2">Name and mailing address of the ISA/JP<br><br>**Japan Patent Office (ISA/JP)**<br>**3-4-3 Kasumigaseki, Chiyoda-ku, Tokyo 100-8915**<br>**Japan**</td><td colspan="2">Authorized officer<br><br><br><br>Telephone No.</td></tr>
</table>

Form PCT/ISA/210 (second sheet) (January 2015)

INTERNATIONAL SEARCH REPORT
Information on patent family members

International application No.

**PCT/JP2021/039382**

| Patent document cited in search report | | | Publication date (day/month/year) | Patent family member(s) | Publication date (day/month/year) |
|---|---|---|---|---|---|
| JP | 2008-150535 | A | 03 July 2008 | (Family: none) | |
| JP | 2009-91525 | A | 30 April 2009 | US 2011/0102529 A1<br>claims 1-11, paragraphs [0016], [0051], [0101]-[0104], [0132]-[0138], examples 1-11, tables 1, 2-1, 2-2<br>EP 2182035 A1<br>CN 101778912 A | |
| JP | 2009-275125 | A | 26 November 2009 | (Family: none) | |
| JP | 2008-63500 | A | 21 March 2008 | (Family: none) | |
| WO | 2019/078151 | A1 | 25 April 2019 | US 2020/0248013 A1<br>claims 1, 7, 9-16, paragraphs [0008]-[0012], [0020]-[0022], [0045]-[0049], [0101]-[0109], [0131]-[0139], examples 1-4, tables 1, 2<br>EP 3699243 A1<br>CN 111194338 A | |
| JP | 2003-82024 | A | 19 March 2003 | US 2002/0107303 A1<br>claims 1-9, 25-28, paragraphs [0028]-[0031], [0066], [0067], [0075], [0076], examples (inks A1-A36) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018028080 A
- JP 2019014883 A
- JP 2018083938 A